# EUROPÄISCHE PATENTSCHRIFT

(11) **EP 1 944 840 B1**
(45) Veröffentlichungstag und Bekanntmachung des Hinweises auf die Patenterteilung: **25.05.2011**
(21) Anmeldenummer: 07021853.2
(22) Anmeldetag: 10.11.2007
(51) Int. Cl.: H01S 3/0941, H01S 3/23, B23K 26/06

(54) **Laser-Hochleistungsverstärker**
High power laser amplifier
Amplificateur laser à haute puissance

(30) Priorität: 13.12.2006 DE 102006059223
(43) Veröffentlichungstag der Anmeldung: 16.07.2008
(73) Patentinhaber: EADS Deutschland GmbH, 85521 Ottobrunn (DE)
(72) Erfinder: Peuser, Peter, Prof. Dr., 85521 Riemerling (DE)
(74) Vertreter: Meel, Thomas

(56) Entgegenhaltungen:
- US-A- 5 940 425
- US-A1- 2003 118 073
- US-A1- 2006 158 718
- US-B1- 6 802 290

## Beschreibung

Die Erfindung betrifft eine mit einer Laserverstärkungsvorrichtung versehene Hochleistungslaseranordnung. Außerdem betrifft die Erfindung ein Verfahren zum Liefern von Laserpulsen mit einer hohen Pulsleistung zu einer räumlich eng begrenzten Stelle.

Für zahlreiche Anwendungen von leistungsstarken, insbesondere gepulsten Lasern ist eine möglichst kleine Baugröße erforderlich, um direkt vor Ort die Laserstrahlung applizieren zu können. Da solche kleine Baugrößen von leistungsstarken Lasern häufig nicht realisierbar sind, verwendet man derzeit Quarz-Fasern, durch die die Laserstrahlung transportiert wird, oder auch direkt Faserlaser.

Ein Beispiel einer Laserverstärkungsvorrichtung unter Verwendung von Faserlasern ist in der EP 0 387 075 B1 bzw. deren deutsche Übersetzung DE 690 31 002 T2 offenbart. Es wird für weitere Einzelheiten auf diese Druckschrift verwiesen.

Aus US 2003/0118073 A1 ist eine Laseranordnung bekannt, bei welcher eine Pumpstrahlung und eine zu verstärkende Laserstrahlung mittels eines Multiplexers auf eine gemeinsame Leitung geführt werden. Diese Leitung ist einem Ende eines Laserverstärkers mit einem Gradientenbrechungsindex zugeführt. Am anderen Ende des Laserverstärkers wird die verstärkte Laserstrahlung mittels eines weiteren Muliplexers einer Leitung zugeführt.

US 2006/0158718 A1 beschreibt eine Laseranordnung, bei welcher ein optisches Signal und eine Pumpstrahlung mittels eines Multiplexers auf eine gemeinsame Leitung geführt werden. Diese gemeinsame Leitung ist ein erbium-dotierter Faserverstärker.

US 6,802,290 B1 beschreibt eine Laseranordnung zur Zündung eines Brennstoff-Luftgemisches. Hierbei wird ein zu verstärkende Laserstrahlung an den Anwendungsort transportiert, wo ein Laserverstärker positioniert ist. Dieser Laserverstärker wird mittels eines Pumplasers gepumpt. Die verstärkte Laserstrahlung wird in die Brennstoffkammer geführt, wo das Brennstoff-Luftgemisch gezündet wird.

Im Falle von gepulster Laserstrahlung, welche Leistungswerte im Bereich von weit mehr als 100 MW bereitstellen kann, ist jedoch die Leistung durch die Zerstörschwelle der jeweils verwendeten optischen Faser stark limitiert. So wird beispielsweise schon bei einer Pulsenergie von nur 1 mJ und einer Pulsbreite von 3 ns eine Leistungsdichte von mehr als 250 MW/cm² erreicht, wenn die Laserstrahlung durch einen Lichtwellenleiter mit 400 µm Kerndurchmesser transportiert wird. Dieser Wert liegt schon recht nahe am Zerstörschwellenbereich von Quarz-Fasern.

Für viele Anwendungen ist diese Beschränkung der Pulsenergie bei weitem nicht ausreichend.

Aufgabe der Erfindung ist es, Vorrichtungen und ein Verfahren zur Verfügung zu stellen, mit denen auch an eng begrenzten Stellen Laserstrahlung mit sehr großer Leistung zu Verfügung gestellt werden können.

Diese Aufgabe wird durch eine Hochleistungslaseranordnung mit den Merkmalen des beigefügten Patentanspruches 1 sowie durch ein Verfahren zum Liefern von Laserpulsen mit einer hohen Pulsleistung zu einer räumlich eng begrenzten Stelle mit den Schritten des beigefügten Patentanspruches 16 gelöst.

Vorteilhafte Ausgestaltungen der Erfindung sind Gegenstand der Unteransprüche.

Erfindungsgemäß wird insbesondere eine miniaturisierte, fasergepumpte Laser-Hochleistungsverstärker-Anordnung vorgeschlagen.

Erfindungsgemäß werden eine Pumpstrahlung und eine zu verstärkende Laserstrahlung durch gemeinsame Lichtwellenleiter bzw. wenigstens eine gemeinsame optische Faser zu einem Hochleistungsverstärker geführt. Die Verstärkung der zu verstärkenden Laserstrahlung erfolgt erst am Ende einer gemeinsamen Lichtwellenleitereinrichtung. Die zur Verstärkung der Laserstrahlung notwendige Energie wird durch die Pumpstrahlung zur Verfügung gestellt, welche über einen längeren Zeitraum hinweg zum Beispiel mit weitaus längeren Pulsen - und somit mit einer geringeren Leistung über die Lichtwellenleitereinrichtung zu einem an deren Ende vorgesehenen Laserverstärker geleitet werden kann. Eine endgültige Laserverstärkung erfolgt somit vorzugsweise erst vor Ort. Dadurch können sowohl die Lichtwellenleitereinrichtung als auch der Laserverstärker extrem miniaturisiert werden.

Gemäß einem Aspekt der Erfindung ist hierzu eine Laserverstärkungsvorrichtung mit einem aus einem Lasermedium gebildeten und mittels einer Pumpstrahlung pumpbaren Laserverstärker zum Verstärken einer Laserstrahlung und weiter mit einer gemeinsamen Lichtwellenleitereinrichtung vorgesehen, mit der sowohl die Pumpstrahlung als auch die zu verstärkende Laserstrahlung zu dem Laserverstärker leitbar sind. Der Laserverstärker ist an einem ersten Ende der Lichtwellenleitereinrichtung angeordnet.

Eine erfindungsgemäße Hochleistungslaseranordnung weist eine solche Laserverstärkungsvorrichtung sowie eine Pumpstrahlungsquelle zum Liefern der Pumpstrahlung und eine Laserstrahlungsquelle zum Liefern der zu verstärkenden Laserstrahlung auf.

Ein erfindungsgemäßes Verfahren zum Liefern von Laserpulsen mit einer hohen Pulsleistung zu einem räumlich eng begrenzten oder schwer zugänglichen Anwendungsort beinhaltet mitunter die Schritte:
- Anordnen eines Laserverstärkers am Anwendungsort und
- Senden einer Pumpstrahlung durch eine Lichtwellenleitereinrichtung zu dem Laserverstärker und
- Senden einer zu verstärkenden Laserstrahlung durch dieselbe Lichtwellenleitereinrichtung zu dem Laserverstärker.

Das Verfahren wird unter Verwendung einer solchen Laserverstärkungsvorrichtung und/oder einer solcher Hochleistungslaseranordnung durchgeführt, wobei der an dem ersten Ende der Lichtwellenleitereinrichtung vorgesehene Laserverstärker an dem Anwendungsort angeordnet wird.

Grundsätzlich wäre es auch möglich, zum Bilden des Laserverstärkers ein in einem entsprechenden Pumpvolumen eingeschlossenes Fluid (Gas oder Flüssigkeit) vorzusehen. In diesem Fall sollte jedoch zum Schaffen des Pumpvolumens zum Beispiel ein Gehäuse oder dergleichen am Ende der Lichtwellenleitereinrichtung vorgesehen sein, in welchem das laseraktive Fluid eingeschlossen ist. Weitaus einfacher lässt sich daher der Laserverstärker aus einem Festkörperlasermaterial, wie insbesondere einem laseraktiven Kristall, bilden. Ein solches Festkörperlasermaterial braucht kein Gehäuse, so dass gegenüber aus Fluiden gebildeten Laserverstärkern eine weitere Miniaturisierung erzielbar ist.

Geeignete laseraktive Materialien zum Aufbauen des Laserverstärkers sind beispielsweise Nd:YAG, Nd:YLF und/oder Yb:YAG oder auch mit Tm (Thulium oder mit Ho (Holmium) dotierte Kristalle.

Vorzugsweise werden die Pumpstrahlung sowie die zu verstärkende Laserstrahlung praktisch kollinear an einer ersten Endfläche des Laserverstärkers eingestrahlt. Unter Einfluss der Pumpstrahlung wird in dem Laserverstärker die Laserstrahlung dann verstärkt und durch eine zweite Endfläche ausgegeben. Die Ausstrahlung erfolgt vorzugsweise in der gleichen Richtung wie die Einstrahlungsrichtung. Die Laserverstärkungsvorrichtung hat somit in etwa die Gestalt eines relativ dünnen Lichtwellenleiters, der an seinem Ende mit einem ebenfalls relativ dünn ausführbaren laseraktiven Festkörpermaterial versehen ist. Die hier beschriebene Laserverstärkungsanordnung kann somit wie die zuvor verwendeten Quarzfasern, welche im Stand der Technik auf endgültige Leistung verstärkte Laserpulse zu der Anwendungsstelle transportiert haben, eingesetzt werden. Jedoch lassen sich mit der hier beschriebenen Laserverstärkungsvorrichtung trotz maximaler Miniaturisierung auch Laserpulse mit sehr hoher Leistung auch an sehr eng begrenzten Stellen bereitstellen.

Alternativ zur Erfindung ist zwar grundsätzlich möglich und denkbar, dass die Lichtwellenleitereinrichtung mehrere zum Beispiel parallel geführte Lichtwellenleiter, auch mit jeweils mehreren parallel geführten optischen Fasern, aufweisen kann. Es wäre zum Beispiel grundsätzlich auch denkbar, die Pumpstrahlung und die zu verstärkende Laserstrahlung über separate, nebeneinander geführte Fasern zu dem Laserverstärker zu leiten. Dann werden aber mehrere Fasern benötigt, so dass der Miniaturisierung Grenzen gesetzt sind. Eine größere Miniaturisierung und eine Materialeinsparung ist dadurch erzielbar, dass die Pumpstrahlung und die Laserstrahlung beide durch ein und denselben Lichtwellenleiter geleitet werden. Besonders klein kann dieser ausgeführt werden, wenn er aus nur einer optischen Faser, wie beispielsweise einer Quarz-Faser gebildet ist. Wenn nun die zu verstärkende Laserstrahlung mit sehr kurzen Pulsen, jedoch mit geringer Energie, und die Pumpstrahlung mit längeren Pulsen mit einer größeren Energie erzeugt werden, wird die durch die Faser geleitete Spitzenleistung gekappt, ohne dass man Abstriche bei der insgesamt übertragenen Energie machen muss. Dadurch kann man weitaus dünnere Lichtwellenleiter, insbesondere Glas- oder Quarzfasern als im Stand der Technik verwenden, ohne die Zerstörschwelle der Lichtwellenleiter zu erreichen. Andererseits kann man mit dieser Technik bei gleichbleibender effektiver Lichtwellenleiterquerschnittsfläche am Anwendungsort Laserpulse mit weitaus höherer Leistung als zuvor erzielen.

Der Lichtwellenleiter hat bevorzugt kein Material, das bei den verwendeten Strahlungen laseraktiv wäre. Die Pumpstrahlung und die Laserstrahlung werden demnach unverstärkt bis zu dem Laserverstärker geleitet, wobei erst dort die Verstärkung erfolgt.

Die Energieeinträge der Pumpstrahlungsquelle sowie der Laserstrahlungsquelle können über einen weiten Bereich bis hin zur maximalen Leistungsfähigkeit des verwendeten Lichtwellenleiters ausgewählt werden.

Vorzugsweise senden sowohl die Pumpstrahlungsquelle als auch die Laserstrahlungsquelle Laserpulse, wobei die Pumppulse wesentlich länger sind als die Pulse der zu verstärkenden Laserstrahlung. Aufgrund der größeren Länge können die Pumppulse mit einer höheren Energie eingestrahlt werden, ohne die Leistungsgrenze des Lichtwellenleiters zu erreichen. Die Länge der Pumppulse wird vorzugsweise entsprechend der Lebensdauer des oberen Niveaus des verwendeten Lasermediums des Laserverstärkers eingestellt.

Wenn nun die Pulse der zu verstärkenden Laserstrahlung am Ende der Pumppulse eingestrahlt werden, läst sich die maximale Inversionsdichte ausnutzen.

Selbstverständlich werden auch die Wellenlänge von Pumpstrahlung und Laserstrahlung und das in dem Laserverstärker zu verwendende Lasermedium aneinander angepasst. Eine Anpassung ist einfach realisierbar, wenn die Laserstrahlungsquelle das gleiche Lasermedium verwendet, wie der Laserverstärker.

Ausführungsbeispiele der Erfindung werden vorliegend anhand der beigefügten Zeichnung näher erläutert. Darin zeigt:

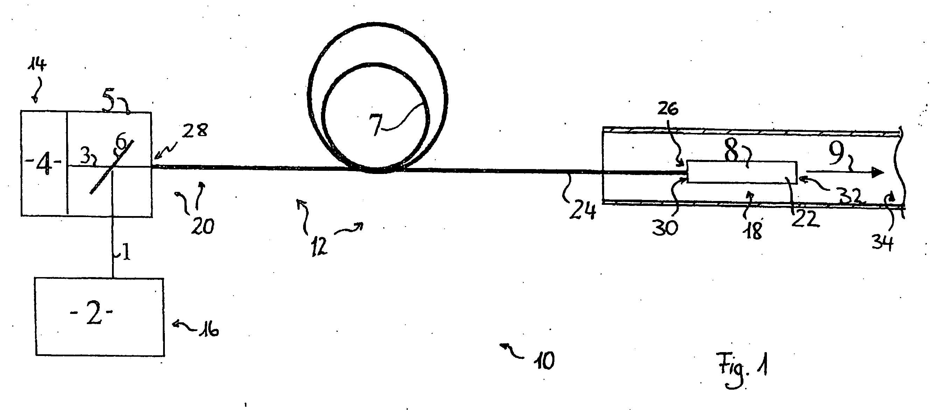

- **Fig. 1**: eine schematische Darstellung einer Hochleistungslaseranordnung mit einer Laserverstärkungsvorrichtung gemäß einer Ausführungsform der Erfindung.

In der einzigen Figur ist eine insgesamt mit 10 bezeichnete Hochleistungslaseranordnung schematisch dargestellt. Die Hochleistungslaseranordnung 10 weist eine Laserverstärkungsvorrichtung 12, eine Pumpstrahlungsquelle 14 und eine Laserstrahlungsquelle 16 auf. Die Laserverstärkungsvorrichtung 12 weist einen Laserverstärker 18 und eine Lichtwellenleitereinrichtung 20 auf. Der Laserverstärker 18 weist ein Lasermedium 22 auf, das mittels einer von der Pumpstrahlungsquelle 14 gelieferten Pumpstrahlung 3 gepumpt werden kann und zum Verstärken einer durch die Laserstrahlungsquelle 16 gelieferten zu verstärkenden Laserstrahlung 1 ausgebildet ist.

In dem dargestellten Beispiel ist die Laserstrahlungsquelle 16 ein diodengepumpter Nd:YAG-Laseroszillator 2 mit relativ geringer Leistung, mit dem ein Strahl der zu verstärkenden Laserstrahlung 1 erzeugt wird. Diese zu verstärkende Laserstrahlung 1 wird durch einen Lichtwellenleiter 24 der Lichtwellenleitereinrichtung 20 geleitet. Der Lichtwellenleiter 24 ist in dem dargestellten Beispiel eine Quarz-Faser 7. Die Leistung der Laserstrahlungsquelle 16 ist derart gewählt, dass die maximal zulässige Intensität hinsichtlich des Lichtwellenleiters 24 nicht überschritten wird.

Durch denselben Lichtwellenleiter 24, also in dem Beispiel durch dieselbe Quarz-Faser 7, wird nun zusätzlich eine weitere Strahlung, nämlich die Pumpstrahlung 3 geleitet.

Die Pumpstrahlung 3 wird in dem Ausführungsbeispiel von einem starken Diodenlaser 4 als Pumpstrahlungsquelle 14 emitiert. Der Diodenlaser 4 ist in dem Ausführungsbeispiel an eine optische Strahlformungseinheit 5 gekoppelt, mittels derer die Diodenlaserstrahlung in die Quarzfaser 7 eingekoppelt werden kann. Diese Diodenlaserstrahlung ist zum Pumpen eines Festkörperlasers geeignet und dient in dem hier vorliegenden Beispiel als Pumpstrahlung 3. Genauer ist in dem hier vorliegenden Beispiel die Diodenlaserstrahlung als Pumpstrahlung 3 zum Pumpen eines als Lasermedium 22 des Laserverstärkers 18 verwendeten Festkörperlasermaterials geeignet.

Die Pumpstrahlung 3 wird in dem Beispiel gepulst abgegeben. Die Pulslänge der Pumpstrahlung 3 liegt typischerweise bei der Lebensdauer des oberen Laserniveaus der Festkörperlasermaterialien, das heißt in einem Bereich von etwa 100 µs bis etwa 1 ms.

Wegen der großen Pulslänge der Pumpstrahlung 3 ist die Leistungsdichte in dem Lichtwellenleiter 24, hier in der einzelnen Quarz-Faser 7, auch bei großen Pulsenergien von beispielsweise 1J und auch bei geringen Kerndurchmessern des Lichtwellenleiters 24 völlig unkritisch.

Die Zusammenführung der beiden Strahlungen - Pumpstrahlung 3 und zu verstärkende Laserstrahlung 1 - erfolgt in dem hier dargestellten Ausführungsbeispiel mit Hilfe eines dichroitischen Spiegels 6. Die Lichtwellenleitereinrichtung 20 ist durch den Lichtwellenleiter 24, hier die Quarz-Faser 7, und die optische Strahlformungseinheit 5 mit dem dichroitischen Spiegel 6 gebildet. Dabei befindet sich an einem ersten Ende 26 der Quarz-Faser 7 der Laserverstärker 18, und an dem entgegengesetzten zweiten Ende 28 der Quarz-Faser 7 befindet sich die optische Strahlformungseinheit 5.

In dem hier dargestellten Beispiel befindet sich an dem ersten Ende 26 als Lasermedium 22 ein laseraktiver Kristall 8. Gemäß einem ersten Ausführungsbeispiel wird als laseraktiver Kristall 8 Nd:YAG verwendet.

Der laseraktive Kristall 8 hat besonders kleine Dimensionen, nämlich etwa 3mm Durchmesser und 20mm Länge und kann beispielsweise bei 807 nm optisch angeregt werden.

Die Endflächen des den Laserverstärker 18 bildenden laseraktiven Kristalls 8 sind vorzugsweise planparallel geschliffen, poliert und optisch so beschichtet, dass an einer der Quarz-Faser 7 zugewandten ersten Endfläche 30 eine hohe Transmission T bei der Wellenlänge der Pumpstrahlung 3 (beispielsweise 807 nm und bei der Wellenlänge der zu verstärkenden Laserstrahlung 1, beispielsweise 1064 nm vorhanden ist. Die gegenüberliegende zweite Endfläche 32 ist vorzugsweise mit einer anti-reflektierenden Beschichtung bei der Wellenlänge der zu verstärkenden Laserstrahlung 1 versehen, so dass die Laserstrahlung 1 möglichst wenig reflektiert wird, also der Reflexionsgrad möglichst klein ist.

Der Kristall 8 wird nun durch die Pumpstrahlung 3 optisch angeregt. Die von dem Laseroszillator 2 stammende zu verstärkende Laserstrahlung 1 kann eine sehr kurze Pulslänge im Bereich von wenigen Nanosekunden haben, beispielsweise im Bereich von 1 ns bis 10ns. Die zu verstärkende Laserstrahlung 1 tritt praktisch kollinear zur Pumpstrahlung 3 in den Kristall 8 ein und wird verstärkt. Hierbei ist es vorteilhaft, wenn der Puls der zu verstärkenden Laserstrahlung 1 am Ende eines Pumppulses der Pumpstrahlung 3 in den Kristall 8 eintritt, da dann in der Regel die maximale Inversionsdichte in dem Lasermedium 22 - Kristall 8 - vorliegt.

In weiteren Ausführungsbeispielen wird das Lasermedium 22 aus Nd:YLF oder Yb:YAG gebildet oder aus mit Tm und/oder Ho dotierten Kristallen.

Bei der dargestellten Laserverstärkungsvorrichtung werden die Pumpstrahlung 3 und die zu verstärkende Laserstrahlung 1 durch einen gemeinsamen Lichtwellenleiter 24, hier in Form der einzelnen Quarz-Faser 7, zu dem Hochleistungs-Laserverstärker 18 geführt, der dadurch extrem miniaturisiert werden kann.

Auf diese Weise ist es möglich, unmittelbar an einem Anwendungsort, der auch an einer sehr eng begrenzten Stelle - hier beispielsweise dargestellt durch ein Rohr 34 - sein kann, einen sehr intensiven Laserstrahl 9 zu erzeugen, der dort von einem miniaturisierten, fasergepumpten Laserverstärker 18 bereitgestellt wird.

### Bezugszeichenliste:

- 1: zu verstärkende Laserstrahlung
- 2: Laseroszillator
- 3: Pumpstrahlung
- 4: Diodenlaser
- 5: optische Strahlformungseinheit
- 6: dichroitischer Spiegel
- 7: Quarz-Faser
- 8: Kristall
- 9: intensiver Laserstrahl
- 10: Hochleistungslaseranordnung
- 12: Laserverstärkungsvorrichtung
- 14: Pumpstrahlungsquelle
- 16: Laserstrahlungsquelle
- 18: Laserverstärker
- 20: Lichtwellenleitereinrichtung
- 22: Lasermedium
- 24: Lichtwellenleiter
- 26: erstes Ende
- 28: zweites Ende
- 30: erste Endfläche
- 32: zweite Endfläche
- 34: Rohr (als Beispiel für eine eng begrenzte Stelle)

## Patentansprüche

1. Hochleistungslaseranordnung (10) mit einer Laserverstärkungsvorrichtung (12), einer Pumpstrahlungsquelle (14) zum Liefern der Pumpstrahlung (3) und einer Laserstrahlungsquelle (16) zum Liefern der zu verstärkenden Laserstrahlung (1),
wobei die Laserverstärkungsvorrichtung (12)
einen am Anwendungsort der zu verstärkenden Laserstrahlung (1) angeordneten, aus einem Lasermedium (22) gebildeten und mittels der Pumpstrahlung (3) pumpbaren Laserverstärker (18), welcher ein laseraktiver Kristall oder ein in ein entsprechendes Pumpvolumen eingeschlossenes Fluid ist, zum Verstärken einer in den Laserverstärker (18) eingestrahlten zu verstärkenden Laserstrahlung (1), und
eine gemeinsame Lichtwellenleitereinrichtung (20)
umfasst,
wobei mit der gemeinsamen Lichtwellenleitereinrichtung (20) sowohl
die Pumpstrahlung (3) als auch
die zu verstärkende Laserstrahlung (1) zu dem Laserverstärker (18) leitbar sind, und
wobei der Laserverstärker (18) an einem Ende (26) der Lichtwellenleitereinrichtung (20) vorgesehen ist,
**dadurch gekennzeichnet, dass**
die Lichtwellenleitereinrichtung (20) wenigstens einen aus einer einzelnen optischen Faser gebildeten Lichtwellenleiter (24) zum Leiten sowohl der Pumpstrahlung (3) als auch der zu verstärkenden Laserstrahlung (1) aufweist und an einem zweiten Ende (28) der Lichtwellenleitereinrichtung (20) eine optische Strahlungsformungseinheit (5) vorhanden ist zum Einkoppeln der von der Pumpstrahlungsquelle (14) ausgesandten Pumpstrahlung (3) in einen auch die zu verstärkende Laserstrahlung (1) leitenden Lichtwellenleiter (24),
wobei die optische Strahlungsformungseinheit (5) wenigstens einen dichroitischen Spiegel (6) zum Einleiten der mit unterschiedlichen Wellenlängen auftretenden Pumpstrahlung (3) und Laserstrahlung (1) aufweist.

2. Hochleistungslaseranordnung nach Anspruch 1, **dadurch gekennzeichnet, dass** der Laserverstärker (18) aus einem laseraktiven Kristall (8), gebildet ist.

3. Hochleistungslaseranordnung nach Anspruch 2, **dadurch gekennzeichnet, dass** der Laserverstärker (18) aus Nd:YAG, Nd:YLF und/oder Yb:YAG und/oder aus mit Tm und/oder Ho dotierten Kristallen wie Tm:Ho:YAG oder Tm:Ho:YLF gebildet ist.

4. Hochleistungslaseranordnung nach einem der voranstehenden Ansprüche,
**dadurch gekennzeichnet,**
**dass** der Laserverstärker (18) eine der Lichtwelleneinrichtung (20) zugewandte erste Endfläche (30), durch die sowohl die Pumpstrahlung (3) als auch die zu verstärkende Laserstrahlung (1) eintreten, und eine zweite Endfläche (32) aufweist, durch die eine verstärkte Laserstrahlung (9) austritt.

5. Hochleistungslaseranordnung nach Anspruch 4, **dadurch gekennzeichnet, dass** die beiden Endflächen (30,32) an den entgegengesetzten Enden des Laserverstärkers (18) planparallel ausgebildet sind.

6. Hochleistungslaseranordnung nach einem der Ansprüche 4 oder 5, **dadurch gekennzeichnet, dass** die erste Endfläche (30) optisch derart beschichtet ist, dass sie für beide Strahlungsarten (3, 1) einen Transmissionsgrad T von 95%≤T≤100%, insbesondere von 99.9%≤T≤100%, aufweist.

7. Hochleistungslaseranordnung nach einem der Ansprüche 4 bis 6, **dadurch gekennzeichnet, dass** die zweite Endfläche (32) optisch derart beschichtet ist, dass sie für die zu verstärkende Laserstrahlung (1) einen Reflexionsgrad R von 0%≤R≤5%, insbesondere von 0%≤R≤0,1 aufweist.

8. Hochleistungslaseranordnung nach einem der voranstehenden Ansprüche, **dadurch gekennzeichnet, dass** der Laserverstärker (18) eine in einer Längsrichtung desselben gemessene Länge von weniger als etwa 30 mm, insbesondere eine Länge von etwa 20 mm, und senkrecht zur Längsrichtung eine maximale Ausdehnung von weniger als etwa 10 mm, insbesondere einen Durchmesser von etwa 3 mm, hat.

9. Hochleistungslaseranordnung nach einem der voranstehenden Ansprüche, **dadurch gekennzeichnet, dass** die Lichtwellenleitereinrichtung (20) zum etwa kollinearen oder im wesentlichen konzentrisch gleichgerichteten Einstrahlen der Pumpstrahlung (3) und der zu verstärkenden Laserstrahlung (1) in das Lasermedium (22) ausgebildet ist.

10. Hochleistungslaseranordnung nach einem der voranstehenden Ansprüche, **dadurch gekennzeichnet, dass** die Laserstrahlungsquelle (16) zum Aussenden von Laserpulsen mit einer Dauer von weniger als 10 ns ausgebildet ist.

11. Hochleistungslaseranordnung nach Anspruch 10, **dadurch gekennzeichnet, dass** die Pulsenergie der Laserpulse der Laserstrahlungsquelle (16) derart gering eingestellt sind, dass die Leistungsdichte in einem Lichtwellenleiter (24) der Lichtwellenleitereinrichtung (20) weniger als 250 MW/cm² beträgt.

12. Hochleistungslaseranordnung nach einem der voranstehenden Ansprüche, **dadurch gekennzeichnet, dass** die Laserstrahlungsquelle (16) einen, insbesondere diodengepumpten, Laseroszillator (2) aufweist, vorzugsweise mit einem gleichen Lasermedium wie der Laserverstärker (18).

13. Hochleistungslaseranordnung nach einem der voranstehenden Ansprüche, **dadurch gekennzeichnet, dass** die Pumpstrahlungsquelle (3) einen Pumplaser, insbesondere Diodenlaser (4), aufweist, der als Pumpstrahlung (3) eine zum Pumpen des Lasermediums (22) des Laserverstärkers (18) geeignete Laserstrahlung aussendet.

14. Hochleistungslaseranordnung nach Anspruch 13, **dadurch gekennzeichnet, dass** der Pumplaser zum Aussenden von Laserpulsen mit einer Dauer im Bereich der Lebensdauer eines oberen Laserniveaus des Lasermediums (22) des Laserverstärkers (18) und/oder mit einer Dauer im Bereich von etwa 100 µs bis etwa 1 ms ausgebildet ist.

15. Hochleistungslaseranordnung nach Anspruch 4, **dadurch gekennzeichnet, dass** die Pulsenergie der Laserpulse des Pumplasers etwa 1 J beträgt.

16. Verfahren zum Liefern von Laserpulsen mit einer hohen Pulsleistung zu einem räumlich eng begrenzten und/oder schwer zugänglichen Anwendungsort (34), mit:
Anordnen eines Laserverstärkers (18), welcher ein laseraktiver Kristall oder ein in ein entsprechendes Pumpvolumen eingeschlossenes Fluid ist, am Anwendungsort (34),
Senden einer Pumpstrahlung (3) über eine Lichtwellenleitereinrichtung (20) zu dem Laserverstärker (18) zum Anregen desselben,
Senden einer zu verstärkenden Laserstrahlung (1) durch die Lichtwellenleitereinrichtung (20) zu dem angeregten Laserverstärker (18), um diese Laserstrahlung (1) am Anwendungsort (34) zu verstärken,
**dadurch gekennzeichnet, dass**
mittels einer optischen Strahlformungseinheit (5) die Pumpstrahlung (3) und die Laserstrahlung (1) in eine einzelne optische Faser der Lichtwellenleitereinrichtung eingekoppelt wird, wobei die optische Strahlformungseinheit (5) wenigstens einen dichroitischen Spiegel (6) zum Einleiten der mit unterschiedlichen Wellenlängen auftretenden Pumpstrahlung (3) und Laserstrahlung (1) aufweist.

17. Verfahren nach Anspruch 16, **dadurch gekennzeichnet, dass** die Laserpulse der Pumpstrahlung (3) länger sind und eine höhere Pulsenergie aufweisen als die Laserpulse der zu verstärkenden Laserstrahlung (1).

18. Verfahren nach einem der Ansprüche 16 oder 17,**dadurch gekennzeichnet, dass** die Laserpulse der zu verstärkenden Laserstrahlung (1) jeweils am Ende eines Laserpulses der Pumpstrahlung (3) in den Laserverstärker (18) eingeleitet werden.

19. Verfahren nach einem der Ansprüche 16 bis 18, **dadurch gekennzeichnet, dass** die Pumpstrahlung (3) und die zu verstärkende Laserstrahlung (1) ohne Verstärkung durch die Lichtwellenleitereinrichtung (20) geleitet werden und dass die zu verstärkende Laserstrahlung (1) erst in dem Laserverstärker (18) verstärkt wird.

## Claims

1. High-power laser arrangement (10) having a laser amplification device (12), a pumping radiation source (14) for delivering the pumping radiation (3) and a laser radiation source (16) for delivering the laser radiation (1) to be amplified,
wherein the laser amplification device (12) comprises a laser amplifier (18) arranged at the application site of the laser radiation (1) to be amplified, formed by a laser medium (22) and pumpable by means of the pumping radiation (3), which is a laser-active crystal or a fluid enclosed in a corresponding pumping volume, for amplifying laser radiation (1) to be amplified which is input into the laser amplifier (18), and
a common light waveguide instrument (20),
wherein both the pumping radiation (3) and
the laser radiation (1) to be amplified can be guided to the laser amplifier (18) by the common light waveguide instrument (20), and
wherein the laser amplifier (18) is provided at one end (26) of the light waveguide instrument (20),
**characterized in that**
the light waveguide instrument (20) comprises at least one light waveguide (24) formed by a single optical fibre for guiding both the pumping radiation (3) and the laser radiation (1) to be amplified and
an optical radiation shaping unit (5) is provided at a second end (28) of the light waveguide instrument (20) in order to couple the pumping radiation (3) emitted by the pumping radiation source (14) into a light waveguide (24) which also guides the laser radiation (1) to be amplified,
the optical radiation shaping unit (5) having at least one dichroic mirror (6) for introducing the pumping radiation (3) and the laser radiation (1) arriving with different wavelengths.

2. High-power laser arrangement according to Claim 1, **characterized in that** the laser amplifier (18) is formed by a laser-active crystal (8).

3. High-power laser arrangement according to Claim 2, **characterized in that** the laser amplifier (18) is formed by Nd:YAG, Nd:YLF and/or Yb:YAG and/or by crystals doped with Tm and/or Ho, such as Tm:Ho:YAG or Tm:Ho:YLF.

4. High-power laser arrangement according to one of the preceding claims, **characterized in that** the laser amplifier (18) has a first end face (30) which faces the light waveguide instrument (20) and through which both the pumping radiation (3) and the laser radiation (1) to be amplified enter, and a second end face (32) through which amplified laser radiation (9) exits.

5. High-power laser arrangement according to Claim 4, **characterized in that** the two end faces (30, 32) are formed plane-parallel on the opposite ends of the laser amplifier (18).

6. High-power laser arrangement according to one of Claims 4 and 5, **characterized in that** the first end face (30) is optically coated in such a way that it has a transmittance T of 95%≤T≤100%, in particular of 99.9%≤T≤100%, for both radiation types (3, 1).

7. High-power laser arrangement according to one of Claims 4 to 6, **characterized in that** the second end face (32) is optically coated in such a way that it has a reflectance R of 0%≤R≤5%, in particular of 0%≤R≤0.1, for the laser radiation (1) to be amplified.

8. High-power laser arrangement according to one of the preceding claims, **characterized in that** the laser amplifier (18) has a length, measured in a longitudinal direction thereof, of less than about 30 mm, in particular a length of about 20 mm, and perpendicularly to the longitudinal direction a maximum dimension of less than about 10 mm, in particular a diameter of about 3 mm.

9. High-power laser arrangement according to one of the preceding claims, **characterized in that** the light waveguide instrument (20) is formed for approximately collinear or essentially concentrically equidirectional input of the pumping radiation (3) and the laser radiation (1) to be amplified into the laser medium (22).

10. High-power laser arrangement according to one of the preceding claims, **characterized in that** the laser radiation source (16) is formed so as to emit laser pulses with a duration of less than 10 ns.

11. High-power laser arrangement according to Claim 10, **characterized in that** the pulse energy of the laser pulses of the laser radiation source (16) is set so low that the power density in a light waveguide (24) of the light waveguide instrument (20) is less than 250 MW/cm².

12. High-power laser arrangement according to one of the preceding claims, **characterized in that** the laser radiation source (16) comprises an in particular diode-pumped laser oscillator (2), preferably having a laser medium which is the same as that of the laser amplifier (18).

13. High-power laser arrangement according to one of the preceding claims, **characterized in that** the pumping radiation source (3) comprises a pumping laser, in particular a diode laser (4), which emits laser radiation suitable for pumping the laser medium (22) of the laser amplifier (18) as pumping radiation (3).

14. High-power laser arrangement according to Claim 13, **characterized in that** the pumping laser is formed so as to emit laser pulses with a duration in the range of the lifetime of an upper laser level of the laser medium (22) of the laser amplifier (18) and/or with a duration in the range of from about 100 µs to about 1 ms.

15. High-power laser arrangement according to Claim 4, **characterized in that** the pulse energy of the laser pulses of the pumping laser is about 1 J.

16. Method for delivering laser pulses with a high pulse power to an application site (34) which is tightly restricted spatially and/or difficult to access, comprising:
arranging a laser amplifier (18), which is a laser-active crystal or a fluid enclosed in a corresponding pumping volume, at the application site (34),
sending pumping radiation (3) via a light waveguide instrument (20) to the laser amplifier (18) in order to excite the latter,
sending laser radiation (1) to be amplified through the light waveguide instrument (20) to the excited laser amplifier (18), in order to amplify this laser radiation (1) at the application site (34),
**characterized in that**
the pumping radiation (3) and the laser radiation (1) are coupled into a single optical fibre of the light waveguide instrument by means of an optical beam shaping unit (5), the optical beam shaping unit (5) having at least one dichroic mirror (6) for introducing the pumping radiation (3) and the laser radiation (1) arriving with different wavelengths.

17. Method according to Claim 16, **characterized in that** the laser pulses of the pumping radiation (3) are longer and have a higher pulse energy than the laser pulses of the laser radiation (1) to be amplified.

18. Method according to Claim 16 or 17, **characterized in that** the laser pulses of the laser radiation (1) to be amplified are respectively introduced into the laser amplifier (18) at the end of a laser pulse of the pumping radiation (3).

19. Method according to one of Claims 16 to 18, **characterized in that** the pumping radiation (3) and the laser radiation (1) to be amplified are guided through the light waveguide instrument (3) without amplification, and **in that** the laser radiation (1) to be amplified is amplified only in the laser amplifier (18).

## Revendications

1. Système laser à haute puissance (10) avec un dispositif amplificateur laser (12), une source de rayonnement de pompage (14) pour fournir le rayonnement de pompage (3) et une source de rayonnement laser (16) pour fournir le rayonnement laser à amplifier (1),
le dispositif amplificateur laser (12) comportant
un amplificateur laser (18), disposé à l'emplacement de l'utilisation du rayonnement laser à amplifier (1), constitué d'un milieu laser (22) et pouvant être pompé au moyen d'un rayonnement de pompage (3), qui est un cristal laser actif ou un fluide enfermé dans un volume de pompage correspondant, pour amplifier un rayonnement laser à amplifier injecté dans l'amplificateur laser (18), et
un dispositif à guide de lumière commun (20),
le dispositif à guide de lumière commun (20) pouvant acheminer
le rayonnement de pompage (3) ainsi que
le rayonnement laser à amplifier (1) vers l'amplificateur laser (18), et
l'amplificateur laser (18) étant prévu à une extrémité (26) du dispositif à guide de lumière (20),
**caractérisé en ce que**
le dispositif à guide de lumière (20) comporte au moins un guide de lumière (24) formé d'une seule fibre optique pour acheminer le rayonnement de pompage (3) ainsi que le rayonnement laser à amplifier (1) et qu'à une deuxième extrémité (28) du dispositif à guide de lumière (20), il existe une unité optique de mise en forme du rayonnement (5) pour injecter le rayonnement de pompage (3) émis par la source de rayonnement de pompage (14) dans l'entrée d'un guide de lumière (24) qui conduit également le rayonnement laser à amplifier (1),
l'unité optique de mise en forme du rayonnement (5) comportant au moins un miroir dichroïque (6) pour y guider le rayonnement de pompage (3) et le rayonnement laser (1) apparaissant avec différentes longueurs d'ondes.

2. Système laser à haute puissance selon la revendication 1, **caractérisé en ce que** l'amplificateur laser (18) est formé d'un cristal laser actif (8).

3. Système laser à haute puissance selon la revendication 2, **caractérisé en ce que** l'amplificateur laser (18) est formé de Nd : YAG, de Nd : YLF et/ou d'Yb : YAG et/ou de cristaux dopés au Tm et/ou au Ho comme pour Tm : Ho : YAG ou pour Tm : Ho : YLF.

4. Système laser à haute puissance selon une des revendications précédentes, **caractérisé en ce que** l'amplificateur laser (18) comporte une première surface d'extrémité (30) orientée vers le dispositif à guide de lumière (20) à travers laquelle pénètrent à la fois le rayonnement de pompage (3) et le rayonnement laser à amplifier (1), et une deuxième surface d'extrémité (32) à travers laquelle sort un rayonnement laser amplifié (9).

5. Système laser à haute puissance selon la revendication 4, **caractérisé en ce que** les deux surfaces d'extrémités (30, 32) sont formées de plans parallèles aux extrémités opposées de l'amplificateur laser (18).

6. Système laser à haute puissance selon une des revendications 4 ou 5, **caractérisé en ce que** la première surface d'extrémité (30) comporte un revêtement optique de manière à présenter pour les deux types de rayonnements (3, 1), un taux de transmission T de 95% ≤ T ≤ 100%, en particulier de 99,9% ≤ T ≤ 100%.

7. Système laser à haute puissance selon une des revendications 4 à 6, **caractérisé en ce que** la deuxième surface d'extrémité (32) comporte un revêtement optique de manière à présenter pour le rayonnement laser à amplifier (1), un taux de réflexion R de 0% ≤ R ≤ 5%, en particulier de 0% ≤ R ≤ 0,1%.

8. Système laser à haute puissance selon une des revendications précédentes, **caractérisé en ce que** l'amplificateur laser (18) a une longueur mesurée dans la direction longitudinale de moins de 30 mm, en particulier une longueur de 20 mm environ, et dans la direction perpendiculaire à sa longueur, une extension maximale de moins de 10 mm environ, en particulier un diamètre de 3 mm environ.

9. Système laser à haute puissance selon une des revendications précédentes, **caractérisé en ce que** le dispositif à guide de lumière (20) est conçu pour l'injection dans la même direction, de manière sensiblement colinéaire ou pour l'essentiel concentrique, du rayonnement de pompage (3) et du rayonnement laser à amplifier (1) dans le milieu laser (22) .

10. Système laser à haute puissance selon une des revendications précédentes, **caractérisé en ce que** la source de rayonnement laser (16) est conçue pour émettre des impulsions laser d'une durée de moins de 10 ns.

11. Système laser à haute puissance selon la revendication 10, **caractérisé en ce que** l'énergie impulsionnelle des impulsions laser de la source de rayonnement laser (16) est réglée à un niveau suffisamment faible pour que la densité de puissance dans un guide de lumière (24) du dispositif à guide de lumière (20) soit inférieure à 250 MW/cm².

12. Système laser à haute puissance selon une des revendications précédentes, **caractérisé en ce que** la source de rayonnement laser (16) comporte un oscillateur laser (2) en particulier à pompage par diodes, de préférence avec un milieu laser identique à celui de l'amplificateur laser (18).

13. Système laser à haute puissance selon une des revendications précédentes, **caractérisé en ce que** la source de rayonnement de pompage (3) comporte un laser de pompage en particulier un laser à diode (4), qui émet un rayonnement de pompage (3) sous la forme d'un rayonnement laser approprié, pour le pompage du milieu laser (22) de l'amplificateur laser (18).

14. Système laser à haute puissance selon la revendication 13, **caractérisé en ce que** le laser de pompage est conçu pour émettre des impulsions laser dont la durée se situe dans la plage de la durée de vie d'un niveau laser supérieur du milieu laser (22) de l'amplificateur laser (18) et/ou dont la durée se situe dans la plage 100 µs environ à 1 ms environ.

15. Système laser à haute puissance selon la revendication 4, **caractérisé en ce que** l'énergie impulsionnelle des impulsions laser du laser de pompage est de 1 J environ.

16. Procédé pour fournir des impulsions laser avec une puissance d'impulsions élevée à un emplacement d'utilisation (34) géométriquement étroitement limité et/ou difficile d'accès, avec
mise en place à l'emplacement d'utilisation (34) d'un amplificateur laser (18) qui est un cristal laser actif ou un fluide enfermé dans un volume de pompage correspondant,
émission d'un rayonnement de pompage (3) à travers un dispositif à guide de lumière (20) vers l'amplificateur laser (18) pour exciter celui-ci,
émission d'un rayonnement laser à amplifier (1) à travers un dispositif à guide de lumière (20) vers l'amplificateur laser (18) excité, pour amplifier ce rayonnement laser (1) à emplacement d'utilisation (34),
**caractérisé en ce que**
on injecte le rayonnement de pompage (3) et le rayonnement laser (1) dans une seule fibre optique du dispositif à guide de lumière au moyen d'une unité optique de mise en forme du rayonnement (5), l'unité optique de mise en forme du rayonnement (5) comportant au moins un miroir dichroïque (6) pour y guider le rayonnement de pompage (3) et le rayonnement laser (1) apparaissant avec différentes longueurs d'ondes.

17. Procédé selon la revendication 16, **caractérisé en ce que** les impulsions laser du rayonnement de pompage (3) sont plus longues et présentent une énergie impulsionnelle plus élevée que les impulsions laser du rayonnement laser à amplifier (1).

18. Procédé selon une des revendications 16 ou 17, **caractérisé en ce que** les impulsions laser du rayonnement laser à amplifier (1) sont respectivement guidées dans l'amplificateur laser (18) à la fin d'une impulsion laser du rayonnement de pompage (3).

19. Procédé selon une des revendications 16 à 18, **caractérisé en ce que** le rayonnement de pompage (3) et le rayonnement laser à amplifier (1) sont guidés sans amplification à travers le dispositif à guide de lumière (20) et **en ce que** le rayonnement laser à amplifier (1) ne sera amplifié que dans l'amplificateur laser (18).
